# EUROPEAN PATENT APPLICATION

(11) **EP 4 786 955 A1**
(43) Date of publication of application: **05.08.2026**
(21) Application number: 26151887.2
(22) Date of filing: 14.01.2026
(51) Int. Cl.: G01N 17/00

(54) **IMAGING SYSTEM FOR USE IN A TESTING ENVIRONMENT**

(30) Priority: 31.01.2025 US 202519042465
(71) Applicant: The Boeing Company, Arlington, VA 22202 (US)
(72) Inventor: Davis, Collins Stephen, Arlington, VA 22202 (US); McKenna, Ashley Ann, Arlington, VA 22202 (US); Moore, Ethan Lee, Arlington, VA 22202 (US)
(74) Representative: Hoffmann Eitle

(57) **Abstract**

An imaging system to capture images of a test object during testing that positions the test object. The imaging system includes a housing with a body that extends around an enclosed interior space. An opening extends through the housing and is in communication with the interior space. A shutter is positioned within the interior space with the shutter being movable between an open position that is positioned away from the opening and a closed position that extends across the opening. An imaging device is positioned within the interior space and aligned with the opening with the imaging device configured to capture an image of the test object when the shutter is in the open position.

## Description

### TECHNOLOGICAL FIELD

The present disclosure relates generally to the field of imaging and, more specifically, to an imaging system configured to be used within a testing environment.

### BACKGROUND

Various objects such as but not including materials (e.g., metal coupons) as well as manufactured parts (e.g., vehicle parts, building components, industrial machinery) require testing to ensure they meet certain physical requirements. For example, aircraft parts are tested to ensure they can withstand various environments in which they will be operating. The testing includes placing the object within the interior of a test chamber. The object is then exposed to a test material including but not limited to one or more of salt, water, steam, and various corrosive materials. The test materials can be applied as a liquid and/or gas (e.g., saltwater steam). The testing can extend for various durations depending upon the testing protocols. One example of testing includes the American Society for Testing and Materials (ASTM) testing standards.

Images of the test object are obtained during the testing. The images are used to analyze the effect of the test material on the test object. An issue with this process is the environment within the interior space is not conducive to capturing accurate images of the test object. For example, the environment can have a high moisture level that fogs the imaging device. Further, the environment can damage the imaging device.

Current techniques include capturing images of the test object during a pause in the testing protocol. This includes stopping the test protocol and opening chamber to access the test object in the interior space. Once the chamber is opened, the imaging device is used to capture the images. A drawback of this technique is it requires stopping the testing protocol and opening the interior space. This delays the testing protocol during the time that the interior space is open and the imaging device is being used to capture the images. The delay can also include the amount of time necessary to reseal the interior space and restart the application of the test material.

### SUMMARY

One aspect is directed to an imaging system to capture images of a test object during testing. The imaging system comprises a housing comprising a body that extends around an enclosed interior space. An opening extends through the housing and is in communication with the interior space. A shutter is positioned within the interior space with the shutter being movable between an open position that is positioned away from the opening and a closed position that extends across the opening. An imaging device is positioned within the interior space and aligned with the opening, the imaging device configured to capture an image of the test object when the shutter is in the open position. Wherein the opening is unobstructed with gas within the interior space enabled to exit through the opening when the shutter is in the open position.

In another aspect, the interior space is sealed when the shutter is in the closed position and further comprising an inlet through which the gas is input into the interior space to increase a pressure within the interior space.

In another aspect, the shutter is positioned between the opening and the imaging device.

In another aspect, a seal extends around the opening and wherein the shutter contacts against the seal in the closed position to prevent ingress of test material into the interior space when the shutter is in the closed position.

In another aspect, a light is positioned within the interior space with the light configured to illuminate the test object when the shutter is in the open position.

In another aspect, the opening is a first opening and the shutter is a first shutter, further comprising at least one additional opening that extends through the housing and is in communication with the interior space and further comprising at least one additional shutter that is movable between an open position that is away from the at least one additional opening and a closed position that extends across the at least one additional opening.

In another aspect, a gas supply comprises a storage tank and a duct that is connected to the housing and in communication with the interior space, wherein the gas supply is configured to supply the gas to the interior space.

In another aspect, the opening is unobstructed to enable a gas within the interior space to escape through the opening when the shutter is in the open position.

One aspect is directed to a method of capturing images of an test object during testing of the test object. The method comprises: positioning an imaging device within an interior of a housing while a shutter on the housing is in a closed position; performing the testing on the test object with the testing comprising applying test material to the test object and while the shutter is positioned across an opening in the housing; during the testing, moving the shutter to an open position away from the opening; during the testing, capturing images of the test object through the opening while the shutter is in the open position; and during the testing and after capturing the images, moving the shutter to the closed position.

In another aspect, moving the shutter to the closed position comprises positioning the shutter across the opening and preventing the test material from moving through the opening and into the interior of the housing.

In another aspect, opening the shutter comprises moving the shutter away from the opening.

In another aspect, the method further comprises pressurizing the interior of the housing.

In another aspect, the method further comprises lowering the pressure of the interior of the housing by allowing gas in the interior of housing to escape while the shutter is in the open position.

In another aspect, the method further comprises maintaining the pressure within the interior of the housing above a predetermined threshold.

In another aspect, the method further comprises capturing the images of the object while gas from the interior of the housing escapes through the opening.

In another aspect, the method further comprises preventing the gas from the interior of the housing from escaping through the opening by positioning the shutter across the opening in the closed position.

In another aspect, the method further comprises moving the housing and the imaging device relative to the object during the testing.

One aspect is directed to a method of capturing an image of a test object that is in a testing environment. The method comprises: positioning an imaging device within an interior space of a housing; pressurizing the interior space of the housing with a gas; while a shutter that is within the interior space is sealing an opening in the housing, moving the shutter from a closed position an open position; while the shutter is in the open position, capturing images of the test object while the gas is escaping from the interior space through the opening; and after capturing the images, moving the shutter to the closed position.

In another aspect, the method further comprises inputting the gas into the interior space while the shutter is in the open position.

In another aspect, the method further comprises monitoring the pressure within the interior space while the shutter is in the open position, and moving the shutter from the open position to the closed position when the pressure falls below a predetermined level.

In another aspect, moving the shutter between the closed position and the open position comprises rotating the shutter.

In another aspect, the method further comprises maintaining the pressure within the interior space.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic diagram of an imaging system comprising an imaging device and a housing that are positioned within an interior space of a chamber.
Figure 2 is a schematic diagram of a housing.
Figure 3A is a schematic diagram of a shutter in an open position that is away from openings in a housing.
Figure 3B is a schematic diagram of the shutter of Figure 3A now in a closed position that extends across the opening in the housing.
Figure 4 is a schematic diagram of components that are positioned within an interior space of a housing.
Figure 5 is a flowchart diagram of a method of capturing images of a test object during a testing procedure.
Figure 6 is a flowchart diagram of a method of capturing images of a test object during a testing procedure.
Figure 7 is a schematic diagram of a rail system for selectively positioning the housing and the imaging device within the interior space of the chamber during a testing procedure.
Figure 8 is a flowchart diagram of a method of capturing images of a test object during a testing procedure.
Figure 9 is a schematic diagram of a computing device.
Figure 10 is a schematic diagram of a computing device that controls functioning to capture images of a test object during a testing procedure.

### DETAILED DESCRIPTION

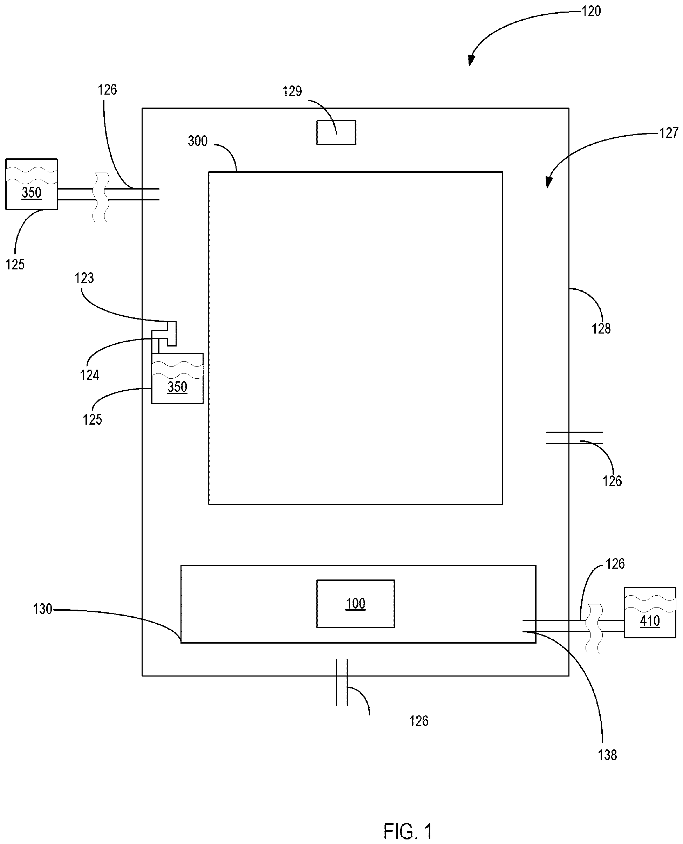

Figure 1 schematically illustrates a chamber 120 for performing testing that applies a test material 350 to a test object 300. The chamber 120 includes outer walls 128 that extend around an interior space 127. In some examples, one or more of the outer walls are doors that can move between open and closed positions to access the interior space 127. One or more ports 126 extend through the outer walls 128 to enable inputting the test material and/or removing the test material from the interior space 127. In some examples, one or more of the ports enable inputting a fluid into the interior space, and one or more ports act as drains to remove the fluid.

The interior space 127 is sized to hold one or more objects 300 that are being tested. In testing protocols with different objects 300, each of the objects 300 can be the same (e.g., multiple aluminum sheets) or different (e.g., an aircraft part and a truck part). In some examples, the test object 300 is a raw material (e.g., a sheet of aluminum) with other objects 300 being manufactured parts (e.g., a strut for a wing of an aircraft). In one specific example, the test object 300 is a metal panel.

The test material 350 includes one or more test inputs. Examples include but are not limited to salt water, fresh water, sodium chloride, and potassium chloride. In some examples, the test material 350 is corrosive to perform corrosion testing on the test object 300.

In some examples, the test material 350 is stored outside of chamber 120 such as in a tank 125 and pumped into the interior space 127. In some examples, the test material 350 is stored within the interior space 127. A fluid system is mounted in the interior space 127 and includes piping 124 for emitting the test material 350 from one or more spray heads 123. In some examples, the test material 350 is applied to the test object 300 as a spray or gas. In some examples, the test material 350 completely or partially submerges the test object 300.

The imaging system is configured to capture images of the test object 300 during the testing protocol and while the test object 300 is positioned in the chamber 120. This enables the testing to continue without requiring the chamber 120 to be opened to capture the images as is currently required. This is advantageous over existing processes that require that the testing protocol be halted, opening the chamber 120, capturing images of the test object 300, closing the chamber 120, and restarting the testing protocol.

One or more imaging devices 100 are positioned within the interior space 127 and configured to capture the images of the test object 300 during the testing. Examples of imaging devices 100 include but are not limited to a charge-coupled devices (CCD), an active-pixel sensor device (CMOS sensor), and an infrared sensor. In some examples, the imaging device 100 is a camera with one or more lenses. The cameras can capture individual images or video. In examples with multiple imaging devices 100, the imaging devices 100 can be the same or different.

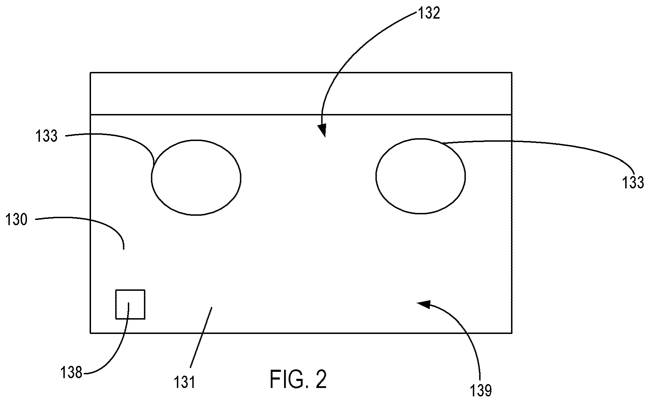

A housing 130 extends around and protects the imaging device 100. The housing 130 includes a protected interior space 139 where the imaging device 100 is positioned. Figure 2 illustrates a housing 130 sized and configured to extend around and contain an imaging device 100. The housing 130 includes a body 131 that extends around an interior space 139. In some examples as illustrated in Figure 2, the body 131 includes a lid 132 that is removable to access the interior space 139. The housing 130 can be constructed from a variety of materials, including but not limited to various plastics and metals. The housing 130 is constructed to prevent and/or reduce the fluid test material 350 from within the chamber 120 from entering and potentially damaging the imaging device 100.

In some examples, the housing 130 is configured to be pressurized to protect the imaging device 100. One or more ports 138 extend through the body 131 and into the interior space 139. A gas supply 410 (see Figure 1) supplies the gas into and pressurizes the interior space 139. In some examples, the gas supply 410 provides ambient air from the external environment into the interior space 139.

The extent of pressurization of the interior space 139 can vary. The pressurization is greater than the pressure within the interior space 127 of the chamber 120 to have a positive pressure environment that prevents the test material 350 from entering into the interior space 139 of the housing 130. A pressure sensor 129 can be positioned in the interior space 127 and a pressure sensors 143 within the interior space 139 of the housing 130 to determine the relative pressures. The housing 130 is pressurized to a pressure that is greater than the testing environment that is outside of the housing 130. This can include a pressure that is greater than the pressure within a chamber 120 (for testing a chamber) and is greater than the pressure outdoors (for testing in an outdoor setting).

The testing environment may include a chamber 120 but is not limited to a chamber 120. The testing environment may also be outside of chamber 120 in an indoor or outdoor testing environment. In some examples, the housing 130 and imaging device 100 are positioned in an outdoor environment and configured to capture images of test object 300 positioned within the outdoor testing environment. While in the outdoor testing environment, the housing 130 allows testing to continue without disruption from weather conditions (e.g., rain) that may otherwise cause damage to the imaging device 100.

The housing 130 includes one or more openings 133 that extend through the body 131 and into the interior space 139. The openings 133 align with the imaging device 100 and enable the imaging device to capture images of the test object 300. Figure 2 illustrates an example with two openings 133. Other examples include more or fewer openings 133. The openings 133 can be located along a single side of the body 131 as illustrated in Figure 2, or along two or more different sides of the body 131.

The opening 133 is unobstructed and provides a clear view of the test object 300 to enable the imaging device 100 to capture the images. However, the unobstructed opening 133 enables the test materials 350 to enter into the interior space 139 and potentially damage the imaging device 100. To prevent and/or reduce this possibility, one or more shutters 140 are mounted in the interior space 139 and movable relative to the housing 130 to selectively extend over the openings 133. The shutter 140 is movable between a closed position that extends over the opening 133 and an open position away from the opening 133.

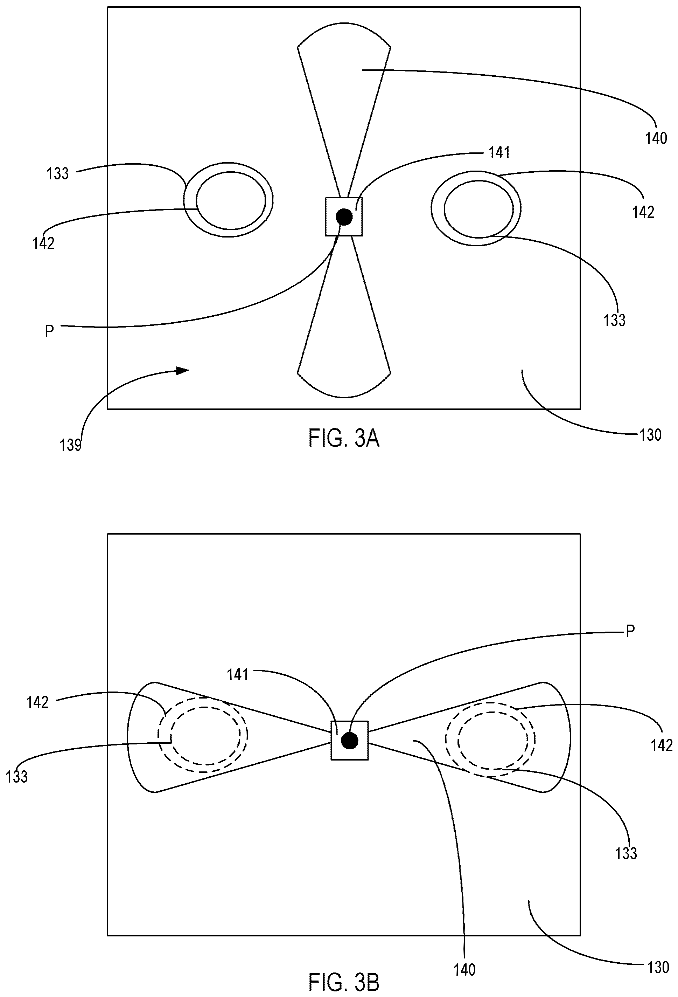

Figure 3A illustrates an example with a shutter 140 positioned within the interior space 139 in proximity to a pair of openings 133. The shutter 140 includes a pair of bodies each with a shape and size to extend over an opening 133. A motor 141 is operatively connected to rotate the shutter 140 about a pivot P. In an open position as illustrated in Figure 3A, the shutter 140 is rotated away from the openings 133. This position enables the imaging device 100 to capture images of the test object 300. In a closed position as illustrated in Figure 3B, the shutter 140 is rotated to a second position that extends over the openings 133. The shutter 140 prevents the ingress of the test materials 350 into the interior space 139. In some examples, the shutter 140 contacts against an inner face of the body 131 to prevent the ingress. In some examples, a seal 142 such as gasket or silicone bead is mounted at each of the openings 133. The shutter 140 contacts against the seal 142 to prevent the ingress.

In the examples of Figures 3A and 3B, the shutter 140 is sized and shaped to extend over multiple openings 133. In other examples, the shutter 140 is sized to extend over a single opening 133. In some examples with multiple shutters 140, a separate shutter 140 is positioned at each of the openings 133.

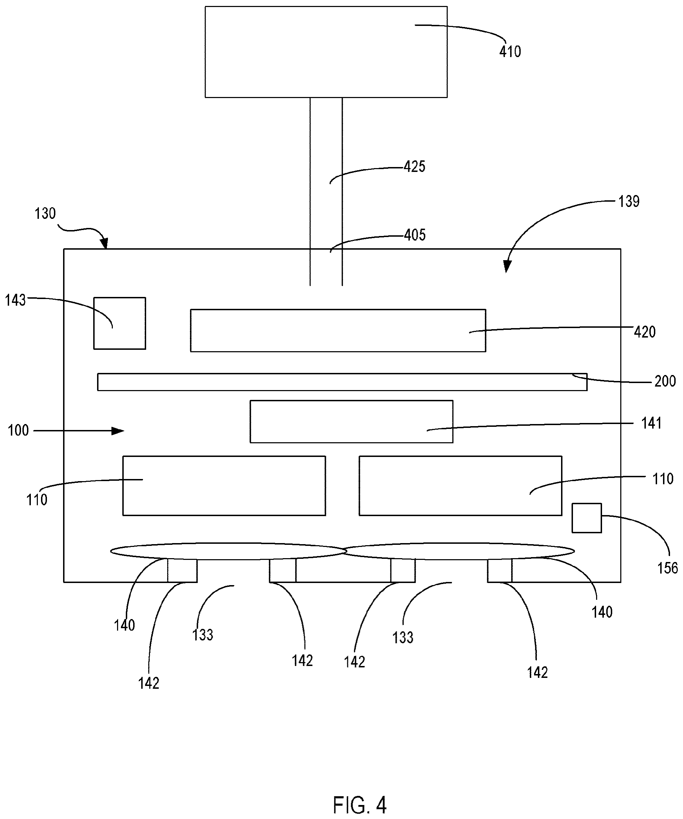

Figure 4 schematically illustrates components that are positioned in the interior space 139 of the housing 130. The housing 130 includes a pair of openings 133 with a sensor 110 (e.g., lens, infrared sensor) of the imaging device 100 positioned at each of the openings 133. Shutters 140 are positioned at each of the openings 133 between the openings 133 and the sensors 110. In the closed position as illustrated, the shutters 140 extend across and close the openings 133. In this example, the shutters 140 contact against seals 142 that extend around the openings 133 and provide for forming a water-tight connection. In the open position, the shutters 140 are positioned away from the openings 133 to enable the sensors 110 to capture images of the target. A motor 141 powers the shutters 140 between the open and closed positions.

A computing device 200 controls the operation of the imaging device 100 to capture the images. The computing device 200 also controls the position of the shutters 140. In some examples, the computing device 200 is configured to determine the period in which the shutters 140 should be in the open position or closed position and sync that timing with the operation of the imaging device 100.

A power supply 420 supplies power to one or more of the components that are within the interior space 139. Examples of power supplies 420 include but are not limited to alkaline batteries and rechargeable (NiMH) batteries. A gas supply 410 supplies gas through a duct 425 and into the interior space 139 of the housing 130.

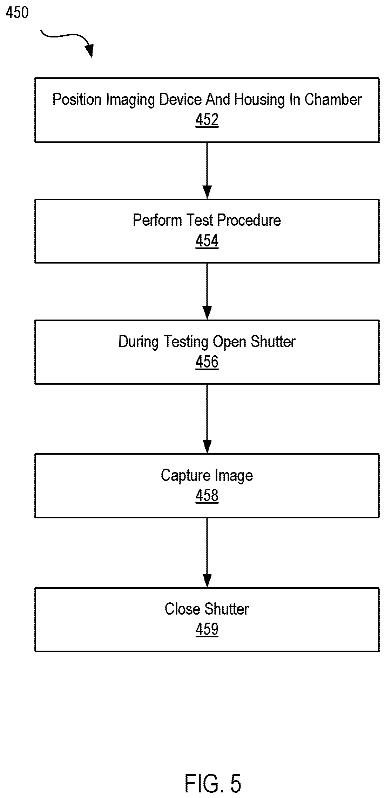

Figure 5 illustrates a method 450 of capturing images during testing on a test object 300. The imaging device 100 is positioned in the interior space 139 of a housing 130 and the housing 130 is sealed. This includes positioning the shutter 140 in the closed position across the opening 133 in the housing 130. The housing 130 with the imaging device 100 are positioned in the interior space 127 of the chamber 120 (block 452). The test object 300 is also in the interior space 127. The chamber 120 is closed and the testing procedure is performed on the test object 300 (block 454). The testing procedure includes applying the test material 350 to the test object.

During the testing, the housing 130 is positioned relative to the test object 300. The shutter 140 is moved to the open position (block 456) and the imaging device 100 captures one or more images of the test object 300 (block 458). Once completed, the shutter 140 is moved back to the closed position (block 459).

In some examples, the interior space 139 is pressurized above the pressure of the interior space 127 of the chamber 120 to prevent/reduce ingress of the test material 350. This occurs as the gas escapes from the interior space 139 through the openings 133 and acts as purge gas to prevent ingress of the test material 350. In other examples, the interior space 139 is not pressurized.

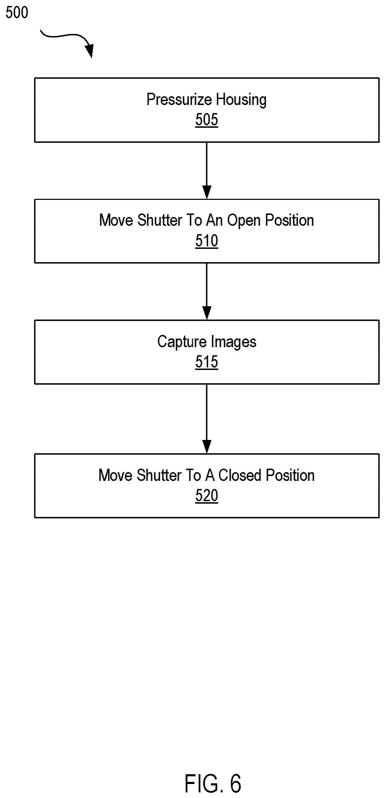

Figure 6 illustrates another method 500 of capturing images by an imaging device 100 of a test object 300 that is being tested within a chamber 120. Initially, the imaging device 100 is protected in a housing 130 and positioned in the interior space 127 of the chamber 120. The housing 130 is connected to a gas supply 410 through a duct 425 that extends into the housing 130. In some examples, a one-way valve 405 is positioned along the duct 425 to prevent the gas from leaving the interior space 127 of the housing 130. The interior space 139 of the housing 130 is pressurized to prevent the ingress of the test material 350 that is being applied to the test object 300 (block 505).

The extent of pressurization of the interior space 139 can vary. In some examples, a pressure sensor 143 (see Figure 4) is mounted within the interior space 139 and a pressure sensor 129 (See Figure 1) is mounted in the interior space 127. The flow of gas from the gas supply 410 is controlled such that the pressure in the interior space 139 of the housing 130 is greater than the pressure in the interior space 127 of the chamber 120.

To capture images, the shutter 140 is moved from a closed position to an open position (block 510). The open position is away from the opening 133 to enable the imaging device 100 to capture the images. In some examples, the open position moves the shutter 140 completely away from the opening 133. In other examples, the shutter 140 partially covers the opening 133 in the open position. The imaging device 100 captures one or more images while the shutter 140 is in the open position (block 515). The number of captured images can vary depending upon the testing.

While the shutter 140 is in the open position, the gas in the interior space 139 exits through the opening 133. This reduces the pressure within the interior space 139 and could enable the test material 350 to enter into the interior space 139. In some examples, the flow rate of the gas is increased when the opening 133 is exposed to maintain some pressurization within the interior space 139 and prevent or reduce the entry of the test material 350. In other examples, the pressure within the interior space 139 is monitored during the time when the shutter 140 is in the open position. In some examples, the monitoring is to determine that a positive pressure is maintained in the interior space 139. The shutter 140 is moved to the closed position if the pressure falls below a predetermined threshold. In other examples, the shutter 140 remains in the open position for a predetermined period of time to capture the images.

After the images are captured by the imaging device 100, the shutter 140 returns to the closed position (block 520). This closes the opening 133 and prevents the ingress of the test material 350. The pressure within the interior space 139 can be re-established to a desired level.

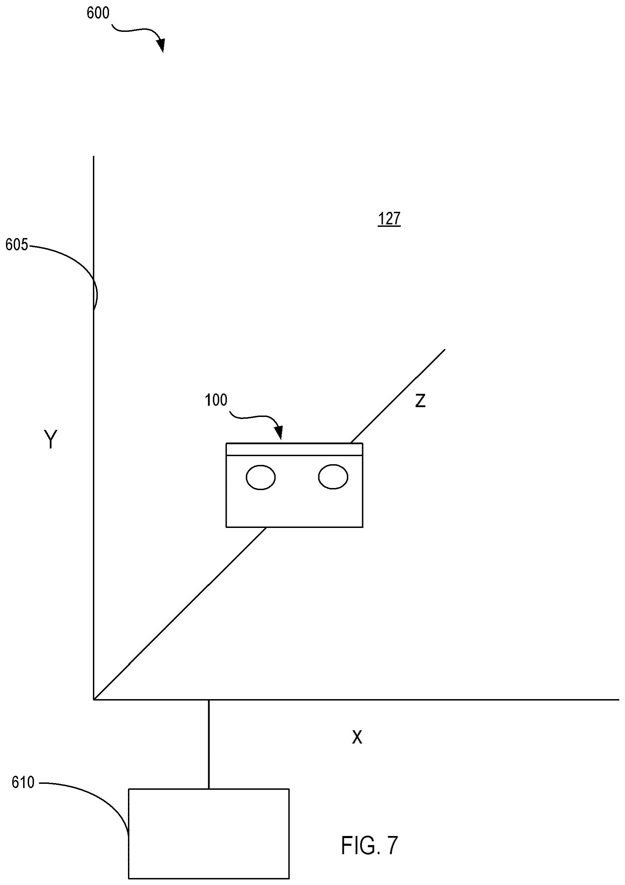

In some examples, the housing 130 and imaging device 100 are moveable within the interior space 127 of the chamber 120 to be located at different positions to capture images of the test object 300 from different viewpoints. Figure 7 is a schematic diagram of a rail system 600 for positioning the imaging device 100 (and housing 130) within the interior space 127. The rail system 600 includes track 605 that engages with the housing 130. The housing 130 can move three-dimensionally about one or more of the x, y, and z axes to capture images from the different viewpoints. The rail system 600 includes a track position controller 610 that controls the position of the housing 130. In some examples, the position controller 610 is in communication with the computing device 200 and receives signals from the computing device 200 regarding the desired position. The position controller 610 tracks the position of the housing 130 and imaging device 100 and sends the information to the computing device 200.

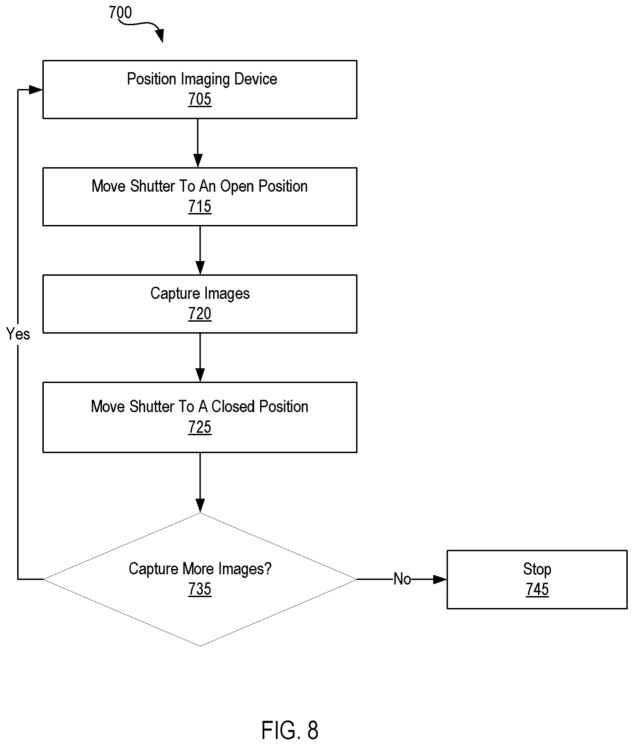

Figure 8 is a method 700 for capturing images from one or more viewpoints within the interior space 127 of the chamber 120 during testing of the test object 300. The imaging device 100 is sealed within the interior space 139 of the housing 130 with the shutter 140 in the closed position. The housing 130 is positioned within the interior space 127 of the chamber 120. The chamber 120 is closed and the testing process starts with the test material 350 being applied to the test object 300. During the testing and with the chamber 120 closed, the housing 130 and imaging device 100 are positioned in the interior space 127 relative to the test object 300 (block 705).

Once in position, the shutter 140 is moved to the open position (block 715). The imaging device 100 captures one or more images of the test object 300 (block 720). The unobstructed opening 133 enables clear images to be obtained which would otherwise not be available. After capturing the images the shutter 140 is returned to the closed position (block 725).

The testing procedure on the test object 300 continues. If more images are needed (block 735), the housing 130 and imaging device 100 are moved in the interior space 127 of the chamber 120. No additional images are captured if not needed (block 745).

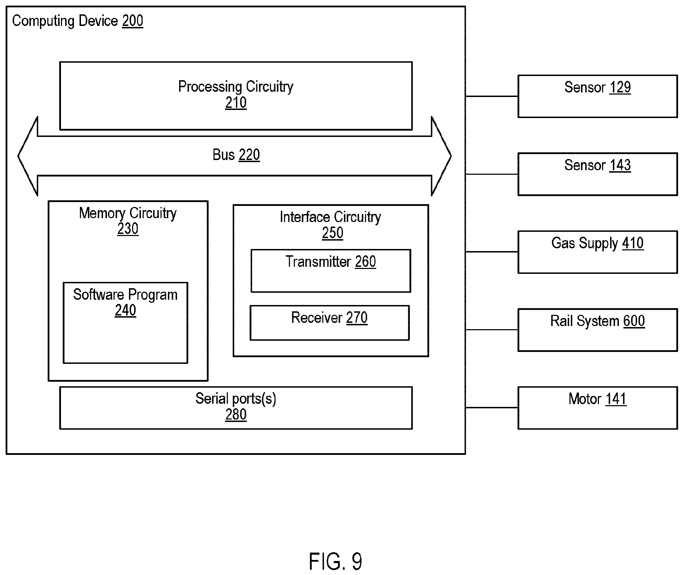

In some examples, one or more of the methods 450, 500, and 700 are performed by the computing device 200 of the imaging device 100. Figure 9 schematically illustrates a computing device 200 configured to operate one or more functions for capturing images of test object 300. The computing device 200 includes processing circuitry 210 is communicatively coupled to memory circuitry 230 and the interface circuitry 250, such as through one or more buses 220. The processing circuitry 210 includes one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. In one example, the processing circuitry 210 is programmable hardware capable of executing a software program 240 stored, e.g., as a machine-readable computer program in the memory circuitry 230.

In some examples, the computing device 200 includes one or more serial ports 280 configured to transmit and/or receive data with other components of the system and/or a remote node monitoring the testing. One example of serial ports 280 are USB ports. In some examples, the computing device 200 includes a parallel port.

The memory circuitry 230 includes non-transitory machine-readable media, whether volatile or non-volatile, including but not limited to solid state media (e.g., SRAM, DRAM, DDRAM, ROM, PROM, EPROM, flash memory, solid-state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in various combination. The memory circuitry 230 may store one or more software programs 240.

Interface circuity 250 is configured to communicate data. In some examples, the interface circuitry 250 is a controller hub configured to control the input and output (I/O) data paths of the computing device 200. Such I/O data paths may include data paths for exchanging signals over a communications network and data paths for exchanging signals with an electronic device or a user. For example, interface circuitry 250 includes a transceiver configured to send and receive communication signals over one or more of a wireless network, Ethernet network, or optical network. In some examples, the interface circuitry 250 is implemented as a unitary physical component or as a plurality of physical components that are contiguously or separately arranged, any of which may be communicatively coupled to any other or may communicate with any other via the processing circuitry 210. In some examples, the interface circuitry 250 includes output circuitry (e.g., transmitter 260 configured to send communication signals over the communications network) and input circuitry (e.g., receiver 270 configured to receive communication signals over the communications network).

In some examples, the software program 240 is stored on a non-transitory computer-readable medium. The software program 240 when run on the computing device 200 causes the computing device 200 to perform the functions described above for capturing the images of the test object 300.

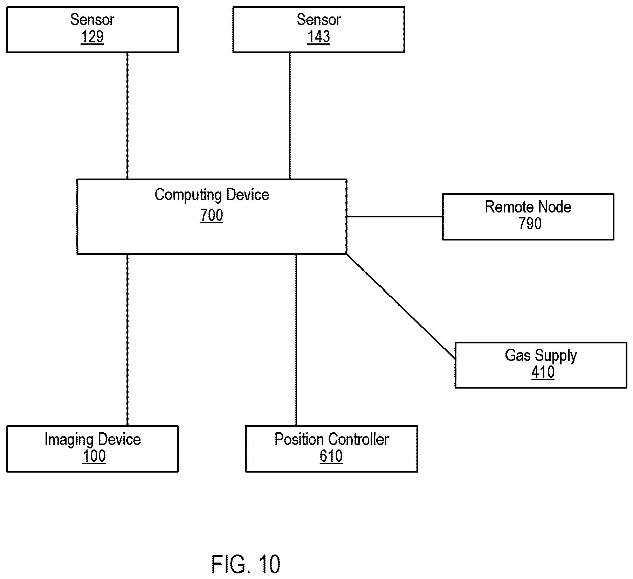

Figure 10 illustrates a configuration that includes a computing device 700 that controls the function of capturing images. The computing device 700 is communicatively coupled to the imaging device 100, position controller 610, and gas supply 410. The computing device 700 also receives inputs from sensors 129, 143. The computing device 700 controls the capturing of images based on inputs from one or more of these components. In some examples, the computing device 700 communicates with a remote node 790 to send and/or receive data regarding the testing process and/or capturing of images.

The computing device 700 includes circuitry to enable the performing of the different functions. The circuitry includes processing circuitry, memory circuitry, and interface circuitry 250 as described above in Figure 9. In some examples, the interface circuitry 250 includes (or is communicatively connected to) one or more graphics adapter, display port, video bus, touchscreen, graphical processing unit (GPU), display port, Liquid Crystal Display (LCD), and Light Emitting Diode (LED) display, for presenting visual information to a user. In some examples, the interface circuitry 250 includes one or more of a pointing device (e.g., a mouse, stylus, touchpad, trackball, pointing stick, joystick), touchscreen, microphone for speech input, optical sensor for optical recognition of gestures, and keyboard for text entry.

In some examples, the imaging device 100 includes a light 156 to illuminate the test object 300. The light 156 is aligned with an opening 133 in the housing 130. When the corresponding shutter 140 is moved to the open position, the light 156 emits light through the opening 133 to the test object 300 to enable images to be captured by the imaging device 100.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present disclosure may, of course, be carried out in other ways than those specifically set forth herein without departing from essential characteristics of the disclosure. The present embodiments are to be considered in all respects as illustrative and not restrictive, and all changes coming within the meaning and equivalency range of the appended claims are intended to be embraced therein.

The following numbered paragraphs disclose further aspects of the present invention.
1. An imaging system to capture images of a test object during testing, the imaging system comprising:
   a housing 130 comprising a body 131 that extends around an enclosed interior space 139;
   an opening 133 that extends through the housing 130 and is in communication with the interior space 139;
   a shutter 140 positioned within the interior space 139, the shutter 140 being movable between an open position that is positioned away from the opening 133 and a closed position that extends across the opening 133;
   an imaging device 100 positioned within the interior space 139 and aligned with the opening 133, the imaging device 100 configured to capture an image of the test object when the shutter 140 is in the open position; and
   wherein the opening 133 is unobstructed with gas within the interior space 139 enabled to exit through the opening 133 when the shutter 140 is in the open position.
2. The imaging system of 1, wherein the interior space 139 is sealed when the shutter 140 is in the closed position and further comprising an inlet through which the gas is input into the interior space 139 to increase a pressure within the interior space 139.
3. The imaging system of 1 or 2, wherein the shutter 140 is positioned between the opening 133 and the imaging device 100.
4. The imaging system of any one of 1 to 3, further comprising a seal 142 that extends around the opening 133 and wherein the shutter 140 contacts against the seal 142 in the closed position to prevent ingress of test material into the interior space 139 when the shutter 140 is in the closed position.
5. The imaging system of any one of 1 to 4, further comprising a light 156 that is positioned within the interior space 139, the light 156 configured to illuminate the test object when the shutter 140 is in the open position.
6. The imaging system of any one of 1 to 5, wherein the opening 133 is a first opening 133 and the shutter 140 is a first shutter 140, further comprising at least one additional opening 133 that extends through the housing 130 and is in communication with the interior space 139 and further comprising at least one additional shutter 140 that is movable between an open position that is away from the at least one additional opening 133 and a closed position that extends across the at least one additional opening 133.
7. The imaging system of any one of 1 to 6, further comprising a gas supply 410 that comprises a storage tank 125 and a duct 425 that is connected to the housing 130 and in communication with the interior space 139, wherein the gas supply 410 is configured to supply the gas to the interior space 139.
8. The imaging system of any one of 1 to 7, wherein the opening 133 is unobstructed to enable a gas within the interior space 139 to escape through the opening 133 when the shutter 140 is in the open position.
9. A method of capturing images of an object during testing of the object, the method comprising:
   positioning an imaging device 100 within an interior of a housing 130 while a shutter 140 on the housing 130 is in a closed position across an opening 133 in the housing 130;
   performing the testing on the object with the testing comprising applying test material 350 to the object and while the shutter 140 is in the closed position;
   during the testing, moving the shutter 140 to an open position away from the opening 133;
   during the testing, capturing images of the object through the opening 133 while the shutter 140 is in the open position; and
   during the testing and after capturing the images, moving the shutter 140 to the closed position.
10. The method of 9, wherein moving the shutter 140 to the closed position comprises positioning the shutter 140 across the opening 133 and preventing the test material from moving through the opening 133 and into the interior of the housing 130.
11. The method of 9 or 10, further comprising pressurizing the interior of the housing 130 with a gas.
12. The method of 11, further comprising lowering a pressure of the interior of the housing 130 by the gas in the interior of the housing 130 escaping through the opening 133 while the shutter 140 is in the open position.
13. The method of 11 or 12, further comprising maintaining a pressure within the interior of the housing 130 above a predetermined threshold.
14. The method of any one of 11 to 13, further comprising preventing the gas from the interior of the housing 130 from escaping through the opening 133 by positioning the shutter 140 across the opening 133 in the closed position.
15. The method of any one of 9 to 14, further comprising moving the housing 130 and the imaging device 100 relative to the object during the testing.
16. A method of capturing images of an object that is in a testing environment, the method comprising:
   positioning an imaging device 100 within an interior space 139 of a housing 130;
   pressurizing the interior space 139 of the housing 130 with a gas;
   while a shutter 140 that is within the interior space 139 is sealing an opening 133 in the housing 130,
   moving the shutter 140 from a closed position an open position;
   while the shutter 140 is in the open position, capturing images of the object through the opening 133 while the gas is escaping from the interior space 139 through the opening 133; and
   after capturing the images, moving the shutter 140 to the closed position.
17. The method of 16, further comprising inputting the gas into the interior space 139 while the shutter 140 is in the open position.
18. The method of 16 or 17, further comprising:
   monitoring the pressure within the interior space 139 while the shutter 140 is in the open position;
      and
   moving the shutter 140 from the open position to the closed position when the pressure falls below a predetermined level.
19. The method of any one of 16 to 18, wherein moving the shutter 140 between the closed position and the open position comprises rotating the shutter 140.
20. The method of any one of 16 to 19, further comprising maintaining the pressure within the interior space 139.

## Claims

1. An imaging system to capture images of a test object during testing, the imaging system comprising:
a housing (130) comprising a body (131) that extends around an enclosed interior space (139);
an opening (133) that extends through the housing (130) and is in communication with the interior space (139);
a shutter (140) positioned within the interior space (139), the shutter (140) being movable between an open position that is positioned away from the opening (133) and a closed position that extends across the opening (133);
an imaging device (100) positioned within the interior space (139) and aligned with the opening (133), the imaging device (100) configured to capture an image of the test object when the shutter (140) is in the open position; and
wherein the opening (133) is unobstructed with gas within the interior space (139) enabled to exit through the opening (133) when the shutter (140) is in the open position.

2. The imaging system of claim 1, wherein the interior space (139) is sealed when the shutter (140) is in the closed position and further comprising an inlet through which the gas is input into the interior space (139) to increase a pressure within the interior space (139).

3. The imaging system of claim 1 or 2, wherein the shutter (140) is positioned between the opening (133) and the imaging device (100), optionally wherein the imaging system further comprises a seal (142) that extends around the opening (133) and wherein the shutter (140) contacts against the seal (142) in the closed position to prevent ingress of test material into the interior space (139) when the shutter (140) is in the closed position.

4. The imaging system of any one of the preceding claims, further comprising a light (156) that is positioned within the interior space (139), the light (156) configured to illuminate the test object when the shutter (140) is in the open position.

5. The imaging system of any one of the preceding claims, wherein the opening (133) is a first opening (133) and the shutter (140) is a first shutter (140), further comprising at least one additional opening (133) that extends through the housing (130) and is in communication with the interior space (139) and further comprising at least one additional shutter (140) that is movable between an open position that is away from the at least one additional opening (133) and a closed position that extends across the at least one additional opening (133).

6. The imaging system of any one of the preceding claims, further comprising a gas supply (4109 that comprises a storage tank (125) and a duct (425) that is connected to the housing (130) and in communication with the interior space (139), wherein the gas supply (410) is configured to supply the gas to the interior space (139).

7. The imaging system of any one of the preceding claims, wherein the opening (133) is unobstructed to enable a gas within the interior space (139) to escape through the opening (133) when the shutter (140) is in the open position.

8. A method of capturing images of an object during testing of the object, the method comprising:
positioning an imaging device (100) within an interior of a housing (130) while a shutter (140) on the housing (130) is in a closed position across an opening (133) in the housing (130);
performing the testing on the object with the testing comprising applying test material (350) to the object and while the shutter (140) is in the closed position;
during the testing, moving the shutter (140) to an open position away from the opening (133);
during the testing, capturing images of the object through the opening (133) while the shutter (140) is in the open position; and
during the testing and after capturing the images, moving the shutter (140) to the closed position.

9. The method of claim 8, wherein moving the shutter (140) to the closed position comprises positioning the shutter (140) across the opening (133) and preventing the test material from moving through the opening (133) and into the interior of the housing (130), optionally wherein the method further comprises moving the housing (130) and the imaging device (100) relative to the object during the testing.

10. The method of claim 8 or 9, further comprising pressurizing the interior of the housing (130) with a gas, optionally wherein the method further comprises lowering a pressure of the interior of the housing (130) by the gas in the interior of the housing (130) escaping through the opening (133) while the shutter (140) is in the open position, further optionally wherein the method further comprises maintaining a pressure within the interior of the housing (130) above a predetermined threshold, further optionally wherein the method further comprises preventing the gas from the interior of the housing (130) from escaping through the opening (133) by positioning the shutter (140) across the opening (133) in the closed position.

11. A method of capturing images of an object that is in a testing environment, the method comprising:
positioning an imaging device (100) within an interior space (139) of a housing (130);
pressurizing the interior space (139) of the housing (130) with a gas;
while a shutter (140) that is within the interior space (139) is sealing an opening (133) in the housing (130), moving the shutter (140) from a closed position an open position;
while the shutter (140) is in the open position, capturing images of the object through the opening (133) while the gas is escaping from the interior space (139) through the opening (133); and
after capturing the images, moving the shutter (140) to the closed position.

12. The method of claim 11, further comprising inputting the gas into the interior space (139) while the shutter (140) is in the open position.

13. The method of claim 11 or 12, further comprising:
monitoring the pressure within the interior space (139) while the shutter (140) is in the open position; and
moving the shutter (140) from the open position to the closed position when the pressure falls below a predetermined level.

14. The method of any one of claims 11 to 13, wherein moving the shutter (140) between the closed position and the open position comprises rotating the shutter (140).

15. The method of any one of claims 11 to 14, further comprising maintaining the pressure within the interior space (139).
